# EUROPEAN PATENT SPECIFICATION

(11) **EP 2 071 083 B1**
(45) Date of publication and mention of the grant of the patent: **22.02.2012**
(21) Application number: 08165908.8
(22) Date of filing: 06.10.2008
(51) Int. Cl.: E02B 3/26

(54) **Apparatus and system for manoeuvring and mooring a boat in a stall**
Vorrichtung und System zum Manövrieren und Verankern eines Boots in einem Anlegeplatz
Appareil et système pour manoevrer et amarrer un bateau dans un emplacement

(30) Priority: 04.10.2007 NO 20075013
(43) Date of publication of application: 17.06.2009
(73) Proprietor: Medisinsk Senter AS, 1338 Sandvika (NO)
(72) Inventor: Apenes, Thoralf, N-1397, Nesøya (NO)
(74) Representative: Heggstad, Jon Dagson

(56) References cited:
- WO-A-2005/097590
- US-A- 2 842 939

## Description

The invention concerns an apparatus and a system for manoeuvring and mooring boats including a manoeuvring- mooring and locking system for leisure boats in jetties, docks or marinas with stalls.

With jetty it is in the following meant a floating footpath out to the boats. An outrigger forms a partition between the boats that also is an attachment point for the mooring. At one side is often the width of the outrigger increased such that it is possible to walk in and out of the boat to the jetty on the outrigger. A stall is limited by the outrigger and the jetty, and describes the area the boat is moored in.

For leisure boats beyond a certain size, in particular sailing boats, it can be difficult to manoeuvre the boat in and out of the stall without contacting the outriggers or without running the bow of the boat, or the stern of the boat into the jetty.

For manoeuvring safely into the stall, it is required a direction directly towards the centre of the stall as it not is possible to see the outriggers when the boat is on its way into the stall. It is also required a certain speed to steer the boat and to stop before the jetty is reached. When the engine is reversed to stop the boat, will the bow of the boat turn somewhat to one side due to the action of the propeller. Boats with bow thrusters can compensate this, but this will require several operations at once. In practical terms will the captain or crew jump down on the jetty while the boat still is drifting to stop and stabilize the boat.

When the boat shall out from the jetty, the crew must climb onboard the boat when the boat is drifting, and when the propeller is running before the boat has steering speed, may again the bow of the boat easily go into an outrigger due to the side force imposed by the propeller.

These problems will be further increased in wind, in particular with a transversal direction or with a direction into the stall.

To prevent the boat from being damaged when colliding with the jetty or the outriggers, it is frequently used randomly placed plastic or rubber parts on these elements, and the boat use fenders.

When a boat is moored after it has been manoeuvred into the stall, must mooring lines that often are attached to the jetty, be fetched by hand if standing on the jetty, or with a boat hook if onboard, and a line is attached in front of and astern of the boat. Only when two, or three (if a spring is used) mooring lines are attached to one side of the boat, is the boat placed stably. Most of mooring lines or line on bigger boats have thereto attached rubber spring that complicates fetching the line with a boat hook.

If the boat is to be locked to the jetty, this must be done with a chain and padlock.

There are other solutions for mooring that not have found extensive use. In for instance US 5,429,063 it is shown a mooring apparatus with rollers on each side of a stall for mooring boats, where the rollers are pressed towards the side of the boat by a springing element. The patent shows one roll at each side of the boat. In GB 2,415,942 it is shown a v-shaped mooring unit where the bow of the boat is led into the v-shaped unit. The unit includes rollers and marking rods to ease the control of the boat. In US 5,408,946 it is shown a mooring unit where a boat can be moored to the side of a jetty with stiff rods. US patent 2,842,939 describes a shock absorber for ships. Triangular frames are pivoted to axle blocks with guide wheels adapted to ride along flanges of U shaped channels fastened to the wall of a dock.

The shock absorber according to US 2,842,939 shows all features of the preamble of claim 1. It does however not solve the problems related to mooring mentioned above. Specifically it does not solve the problem related to boats that are manoeuvred into a stall, and that have to slide along shock absorbing and guiding supports at both sides of the hull, or how to allow the hull of a leisure boat, in particular a sailing boat to be guide into a stall without contacting the outriggers or without running the bow of the boat, or the stern of the boat into the jetty. This is according to the invention solved with an apparatus for manoeuvring and mooring a boat in a stall. The apparatus is adapted for attachment at the sides of the stall that are heading towards the side of the boat and includes a first leg and a second leg, each including a first and a second end. The first and the second leg are pivotally attached to the side of the stall at their first or inner ends such that the first and the second leg forms a V-shape with an angle therein between. The first and the second leg are mechanically connected to each other. The first leg includes a first wheel for contact with the boat placed at the second or outer end of the first leg. The second leg includes a second wheel for contact with the boat placed at the second or outer end of the second leg. The first leg is longer than the second leg.

The apparatus for manoeuvring and mooring of boats may include four V-shaped arms, hereafter denoted V-arms, slightly inclined upwards, with the top hinged to the outriggers.

Each outrigger may support two v-arms, one at the forward half close to the jetty, and one at the rear. The forward and the rear leg on each V-arm have as mentioned different length, such that the longest legs points out of the stall, away from the jetty. The wheels at the end point of each leg may rotate. Stopping elements at each side of the hinge point of the outriggers will limit pivoting of the V-arms such that the V-arms are in a position situated with both legs toward the side of the boat when the boat when sailing into the stall, contacts one of the legs of each V-arm.

The angle between the first and the second leg may be variable.

The angle of the rear V-arm may open to allow the widest part of the boat pass.

A spring may extend between the first and the second leg.

A marking rod may be attached at the outer part of the second leg to show the right direction into the stall.

The marking rod may include a unit for keeping a mooring line.

The marking rod may be a part of a locking system where the first leg can be locked in a closed position.

The first leg may be locked in the closed position.

Furthermore the invention includes a system for manoeuvring and mooring a boat in a stall with two sides where the V-arm described above are attached at each side of the stall.

The system may, as explained above, include four V-arms such that two V-arms are placed at the inside of each outrigger in a marina with stalls. The point or apex of the V-arms is hinged to the outriggers to ease manoeuvring of boats in and out of the stall and reduce, or eliminate the use of mooring lines. The V-arms have a short and a long leg, where the long leg points out of the stall. The wheels at the end of each leg may rotate horizontally and vertically. The stopping elements at each side of the hinge point ensure that the V-arms are in a position to allow both legs to be in contact with the side of the boat when the boat is correctly steered into the stall. The angle of the V-arms may during installation be adjusted to the shape of the hull of the boat, and may be installed such that all the legs point directly towards the side of the hull. Due to the different length of the outer and inner leg of each V-arm and the rotation in the hinge point will when manoeuvring the boat into the stall, the outer long leg press the inner short leg and thereby the boat towards the centre as long as the width of the boat is increased at their contact point between the boat and the outer leg.

The variable angle between the legs may be determined during installation such that the rear V-arm may open to allow the widest part of the boat to pass. The spring may hold the V-arm in a closed resting position.

It may be four marking rods and these may be attached at the outermost part of the forward inner leg of the V-arms, and at the outermost part of outer leg of the rear V-arm to show the correct direction into the stall. The length of the marking rods may be adjusted such that these are clearly visible from the wheel house/cockpit.

The lock of the rear V-arm may for instance be designed such that one strut may be pulled towards a marking rod that presses a locking bolt into an opening in an L-hook, when the V-arm is held in a closed position by means of the spring.

The two inner V-arms (on the forward half of the outriggers close to the jetty) may be given fixed angle adapted to a dedicated boat during the first installation, and may have a resilient device that allows a certain opening of the angle of the arm to provide a braking action for the boat. The two outer V-arms may have a variable angle such that they can open up to allow the widest part of the boat to pass. The V-arms may be angled upwards from a horizontal plane to point directly towards a side of a boat.

The marking rods may stand vertically and should be visible from the steering place/oockpit of the boat. All the marking rods may be equipped with an apparatus for storing mooring lines. The rear marking rods may from parts of a locking system where the rearward V-arm is locked in a closed position if it is desired to lock the boat in the stall.

Depending on the hull shape and local weather conditions it may be possible to omit the mooring lines or reduce the use of mooring lines to for instance the two bow lines.

When manoeuvring in towards the jetty, it is possible to sail into the stall with a greater directional variation than what is the case in traditional marinas. During sailing in, it is possible to lay the boat towards the marking rod on the outer V-arm at the side the boat goes into the stall, and to steer the boat inside the marking rod on the inner V-arm at the opposite side. When the bow of the boat has passed the inner marking rod, the steering can be released and the boat will place it self in the correct position on its own.

Both legs of the outer V-arm at that side of the outrigger the boat goes into the stall, will contact the side of the boat, open somewhat and rotate along with the boat when the boat is controlled further into the stall. The V-arms on the opposite outrigger will contact the boat, and eventually be situated with all four legs towards the side of the boat to adjust the direction towards the centre of the stall. Depending on the angle of attack between the boat and the stall, and the shape of the hull, will outer V-arm open and correct the direction somewhat, where as the inner V-arm provides substantial correction. The correction of the direction/bearing occurs as the long leg of the V-arm is pressed towards the side of the boat that due to rotation of the arm presses the short inner legs and thereby the boat towards the centre until the widest portion of the boat has passed the rearward, long leg in the forward V-arm.

When the boat is stably placed in the right position, mooring lines may if desired be fetched from the marking rods without using a boat hook. If locking of the boat is desired, this may for instance be done by manipulating the rear marking rod that may lock the V-arm in the closed position.

Short description of the enclosed figures:
Fig. 1 shows a boat moored in a stall with an apparatus according to the invention;
Fig. 2 shows a traditional mooring with mooring lines and fenders;
Fig. 3 shows outriggers with an attachment bracket seen from above;
Fig. 4 is a cross-section of the outrigger with attachment bracket;
Fig. 5 shows an outrigger with an attached V-arm, from above;
Fig. 6 is a cross-section of the outrigger with a hub attached thereto;
Fig. 7 shows the inner and outer part (to the right) of the forward legs seen from the side;
Fig. 8 shows the inner and outer part of the forward leg seen from above;
Fig. 9 shows the hub seen from the side (at the top) and from above;
Fig. 10 shows the inner and outer part (to the right) of the rearward legs seen from the side;
Fig. 11 shows the inner and outer part of the rear legs seen from above;
Fig. 12 shows a cross-piece seen from above (at the top) and from the side;
Fig. 13 shows an outrigger with an attached attachment bracket seen from above;
Fig. 14 shows a cross-section of the outrigger with bracket;
Fig. 15 shows an outrigger with a V-arm from above;
Fig. 16 shows a cross-section of the outrigger with an attached hub;
Fig. 17 shows the inner and outer part (to the right) of the forward leg from the side;
Fig. 18 shows the inner and outer part of the forward leg from above;
Fig. 19 shows the hub from the side (at the top) and from above;
Fig. 20 shows the inner and outer part (to the right) of the rearward leg from the side;
Fig. 21 shows the inner and outer part of the rearward leg from above;
Fig. 22 shows a spring between the forward and rearward legs seen from above when the cross-piece has been disassembled;
Fig. 23 show parts of the forward and rearward leg hinged to a hub with a cross-piece and spring attached thereto, seen from the stall towards the outrigger; and Fig. 24 shows the cross-section seen from above (at the top) and the side.

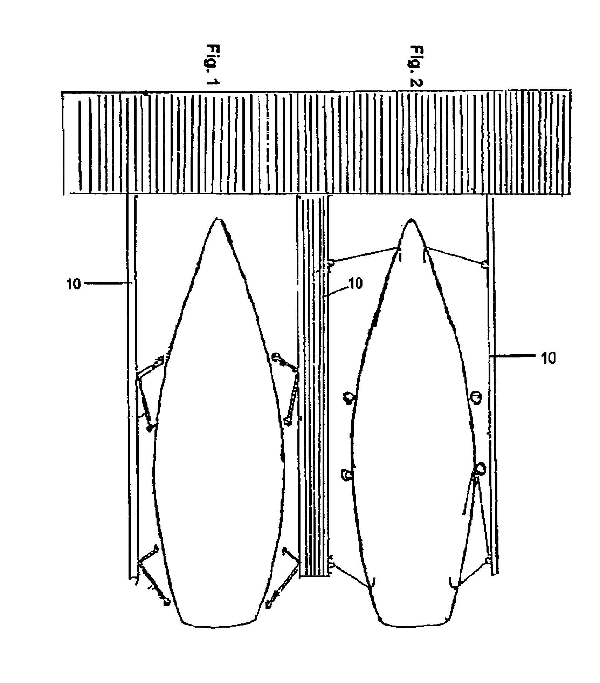

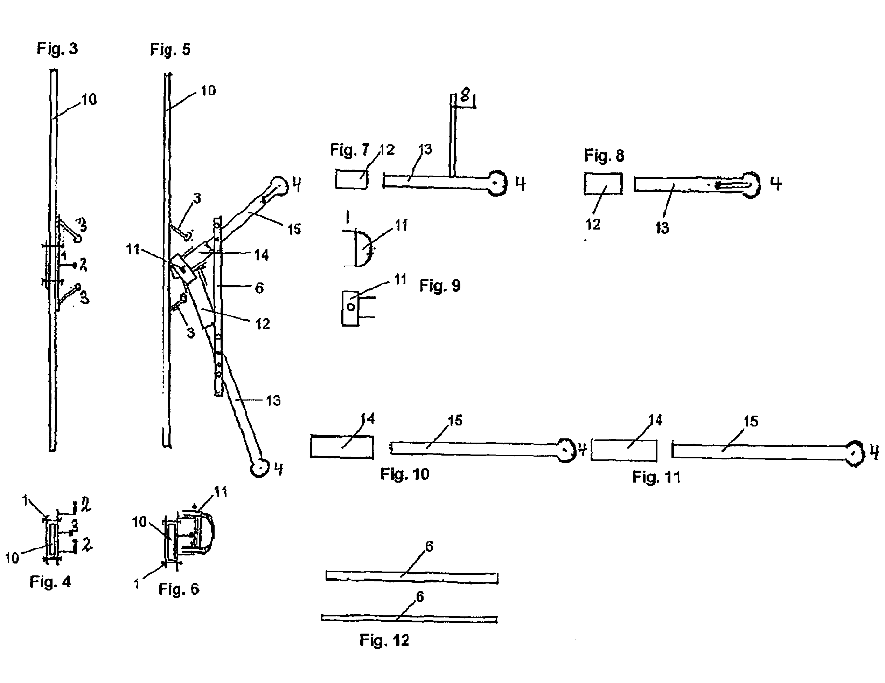

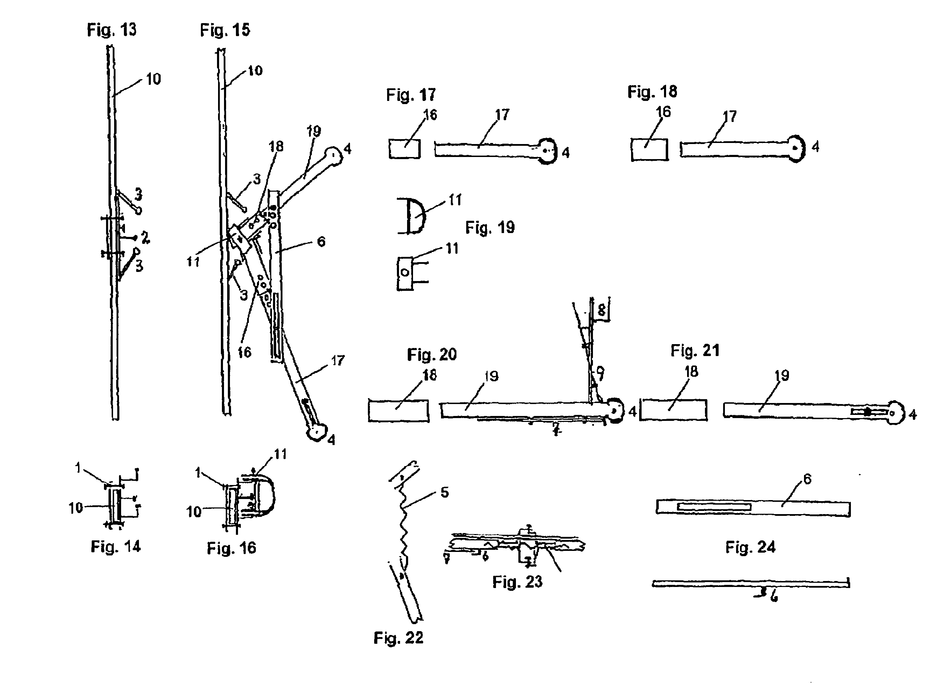

The manoeuvring- and mooring system according to the invention is shown on fig. 1 - 24 where fig. 1 and 2 show a situation description, fig. 3 - 12 show forward V-arm and fig. 13 - 24 the rearward V-arm.

The parts may be made of metal, plastic or any other suitable material, and if necessary may each V-arm include floating means.

On the figures 3 - 12, is the forward V-arm shown. On fig. 3 is an outrigger 10 with an attachment bracket 1 attached thereto, shown from above. Fig. 4 shows the outrigger 10 with an attachment bracket 1 as shown on fig. 3 in cross-section. Fig. 5 shows the outrigger 10 with a V-arm attached thereto. The V-arm has a forward leg with an outer part 13 and an inner part 12 attached to the attachment bracket 1, and a rearward leg with an outer part 15 and an inner part 14. A cross-piece 6 extends between the forward leg and the rearward leg. In fig. 6 it is shown a cross-section of the outrigger 10 shown on fig. 5, with a hub 11 attached thereto. Fig. 7 shows the inner and outer part (to the right) of the forward leg seen from the side. Fig. 8 shows an inner and outer part of the forward leg seen from above. In fig. 9 is the hub 11 seen from the side (at the top) and from above. In fig. 10 is furthermore an Inner and outer part (to the right) of a rear leg seen from the side. Fig. 8 shows an inner and outer part of the rear leg from above. Fig. 12 shows a cross-piece seen from above (at the top) and from the side.

In fig. 13 - 24 is the rear V-arm shown. Fig. 13 shows the outrigger 10 with an attachment bracket 1 attached thereto, seen from above. Fig. 14 shows a cross-section of fig. 13 of the outrigger 10 with a bracket. Fig. 15 shows the outrigger 10 attached to the V-arm. The V-arm has a forward leg with an outer part 17 and an inner part 16 attached to the attachment bracket 1, and a rear leg with an outer part 19 and an inner part 18. The cross-piece 6 extends between the forward leg and the rearward leg. Fig. 16 is a cross-section of the outrigger 10 shown on fig. 15 of the outrigger 10 with a hub 11 attached thereto. Fig. 17 shows the inner 16 and outer part 17 (to the right) of the forward leg from the side. Fig. 18 shows the inner 16 and outer part 17 of the forward leg from the above. Fig. 19 shows a hub 11 from the side (at the top) and from above. Fig. 20 shows the inner 18 and outer part 19 (to the right) of the rear leg from the side. Fig. 21 shows the inner 18 and outer part 19 of the rear leg from above. Fig. 22 shows a spring 5 between the forward and rearward leg seen from above when the cross-piece 6 has been disassembled. Fig. 23 shows a part of the forward and rearward leg hinged in a hub with a cross-piece 6 and spring 5 attached thereto, seen from the stall towards the outrigger. Fig. 24 shows the cross-piece 6 from above (at the top) and from the side.

The attachment bracket 1 that is attached to the outrigger in a not more accurately specified way, but as for instance shown on fig. 4, 14, has two hooks 2 that are placed vertically above each other and that serve as hinge points for the hubs 11 of the V-arms. A stopping element 3 placed at each side of the hinge point of the bracket 1 is not more closely described. The stopping elements 3 are shown on fig. 5, 15 and stop the rotation in the hub 11 and ensure that the V-arms are placed in a position ready to receive the boat.

Each leg (shown on fig. 7, 8, 10, 11, 17, 18, 20, 21) of each V-arm is attached to its respective hub 11 that is hinged to the attachment brackets 1 of the outriggers 10. The attachment between the hub 11 and the leg, may allow, in a not further defined manner, an upwards inclination such that each leg may be directed directly against the side of the boat and can furthermore be corrected for the difference in height that occurs when the two hubs 1 of each V-arm for instance are hinged above each other on the hooks 2 in the attachment bracket 1.

The inner and outer part of the legs may have a tubular or edged shape, and an inner part may have a greater cross-section than the outer part such that this telescopically can be slide into the inner part during assembly, and such that the length of the leg may be adapted to the type of boat.

A wheel 4 is attached at the end of each leg and is supported such that it may rotate vertically and horizontally.

The legs 12, 13, 14, 15, 16, 17, 18, 19 at fig. 7, 8, 9, 10 and 17, 18, 20, 21 respectively of the V-arms are connected with a cross-piece 6 shown on fig. 12, 24 In the forward V-arm close to the jetty, is the cross-piece attached to each leg such that the angle of the V-arm is allowed to vary, and may have a resilient action that will brake the boat, for instance by including a spring 5 on fig. 22 and 23. The cross-piece may be adapted to each specific type of boat. A sliding motion between the legs 16, 17, 18, 19 is in the rear V-arm is allowed as shown on fig. 17, 18 and 20, 21 respectively and the cross-piece 6 shown on fig. 24, allows the angle to be varied between two outer points determined during installation such that the widest part of the boat may pass. This may for instance occur as shown on fig. 15 in that the cross-piece 6 is attached with a bolt to the forward and rearward leg that respectively allows rotation through a hole and a sliding motion through a slit in the crosspiece 6. A spring 5, shown on fig. 22, is attached between both legs and holds the V-arm in a closed resting position. The rear cross-piece 6 may be a part of a locking system, an embodiment of which is described below.

A marking rod 8 is attached at an outer edge of a leg on the forward leg of V-arm that is close to the jetty in a not more closely described way, such that it is placed vertically independent of the angle of the leg in the hub. The marking rod 8 may be extended telescopically such that it is easily visible from the rudder place during manoeuvring out of and into the stall. An apparatus for suspending a mooring line may be placed at the top of the marking rod 8 if desirable as an additional mooring.

A marking rod 8 can in the same way be attached at the outer part of the rear leg of the rear V-arm. This may also include an adjustable attachment to the leg such that it may be placed vertically, and such that it can be extended telescopically. Similarly may the marking rod 8 include an apparatus for holding a mooring line. The rear marking rod 8 may additionally be a part of a locking system. As for instance shown on fig. 20, may the rear marking rod 8 be equipped with a locking rod 9 that pushes a locking bolt 7 into a slit in a L hook in the rear cross-piece 6 to lock the arm in a closed position.

## Claims

1. An apparatus for manoeuvring and mooring a boat in a stall, adapted for attachment to the sides (10) of the stall that face towards the side of the boat, including a first leg (12,13,16,17) and a second leg (14,15,18,19), each including a first and a second end, wherein the first and the second leg are pivotally attached to the side of the stall at their first ends such that the first and the second leg forms a V-shape with an angle therein between, and wherein the first and the second leg are mechanically connected to each other, **characterized in that**:
the first leg (12, 13, 16, 17) includes a first wheel (4) for contact with the boat placed at the second end of the first leg (12, 13, 16, 17);
the second leg (14, 15, 18, 19) includes a second wheel (4) for contact with the boat placed at the second end of the second leg (14, 15, 18, 19); and
the first leg (12, 13, 16, 17) is longer than the second leg (14, 15,18, 19).

2. The apparatus according to claim 1, wherein
the angle between the first and the second leg is variable.

3. The apparatus according to claim 2, wherein
the angle may be expanded to let the widest part on the boat to pass.

4. The apparatus according to claim 3, wherein
a spring (5) extends between the first and the second leg.

5. The apparatus according to claim 1, wherein
a marking rod (8) is attached at an outer end of the second leg to visualize the correct direction into the stall.

6. The apparatus according to claim 5, wherein
the marking rod is equipped with an apparatus for storing the mooring line.

7. The apparatus according to claim 5, wherein
the marking rod (8) may be a part of a locking system where the first leg (16, 17) may be locked in a closed position.

8. The apparatus according to claim 1, wherein
the first leg (16, 17) may be locked in a closed position.

9. A system for manoeuvring and mooring of a boat in a stall with two sides,
**characterized in that**:
two apparatuses as defined in claim 1 are attached to each side of the stall.

## Patentansprüche

1. Eine Vorrichtung zum Manövrieren und Festmachen eines Bootes in einem Anlegeplatz, die zur Anbringung an die Seiten (10) des Anlegeplatzes angepasst ist, die in Richtung der Seite des Bootes zeigen, die einen ersten Abschnitt (12, 13, 16, 17) und einen zweiten Abschnitt (14, 15, 18, 19) einschließt, wobei jeder ein erstes und ein zweites Ende einschließt, wobei der erste und der zweite Abschnitt schwenkbar an der Seite des Anlegeplatzes an den ersten Enden angebracht ist, so dass der erste und der zweite Abschnitt eine V-Form mit einem Winkel dazwischen bildet, und wobei der erste und der zweite Abschnitt mechanisch miteinander verbunden ist, **dadurch gekennzeichnet, dass**:
der erste Abschnitt (12, 13, 16, 17) ein erstes Rad (4) für einen Kontakt mit dem Boot einschließt, das an dem zweiten Ende des ersten Abschnitts (12, 13, 16, 17) platziert ist;
der zweite Abschnitt (14, 15, 18, 19) ein zweites Rad (4) für einen Kontakt mit dem Boot einschließt, das an dem zweiten Ende des zweiten Abschnitts (14, 15, 18, 19) platziert ist; und
der erste Abschnitt (12, 13, 16, 17) länger ist als der zweite Abschnitt (14, 15, 18, 19).

2. Die Vorrichtung nach Anspruch 1, wobei
der Winkel zwischen dem ersten und dem zweiten Abschnitt veränderbar ist.

3. Die Vorrichtung nach Anspruch 2, wobei
der Winkel aufgeweitet werden kann, um die breiteste Stelle an dem Boot durchzulassen.

4. Die Vorrichtung nach Anspruch 3, wobei
eine Feder (5) sich zwischen dem ersten und dem zweiten Abschnitt erstreckt.

5. Die Vorrichtung nach Anspruch 1, wobei
ein Markierungsstab (8) an einem äußeren Ende des zweiten Abschnitts angebracht ist, um die korrekte Richtung in den Anlegeplatz sichtbar zu machen.

6. Die Vorrichtung nach Anspruch 5, wobei
der Markierungsstab mit einem Gerät zum Aufnehmen der Festmacheleine ausgestattet ist.

7. Die Vorrichtung nach Anspruch 5, wobei
der Markierungsstab (8) Teil eines Verriegelungssystems sein kann, bei dem der erste Abschnitt (16, 17) in einer geschlossenen Position verriegelt werden kann.

8. Die Vorrichtung nach Anspruch 1, wobei
der erste Abschnitt (16, 17) in einer geschlossenen Position verriegelt werden kann.

9. Ein System zum Manövrieren und Festmachen eines Bootes in einem Anlegeplatz mit zwei Seiten,
**dadurch gekennzeichnet, dass**:
zwei Vorrichtungen, wie in Anspruch 1 definiert, an jeder Seite des Anlegeplatzes angebracht sind.

## Revendications

1. Appareil pour manoeuvrer et amarrer un bateau dans un emplacement, conçu pour être attaché aux côtés (10) de l'emplacement qui sont tournés vers le côté du bateau, comprenant une première béquille (12, 13, 16, 17) et une seconde béquille (14, 15, 18, 19), chacune comprenant une première et une seconde extrémité, les première et seconde béquilles étant attachées pivotantes au côté de l'emplacement à leur première extrémité de telle sorte que les première et seconde béquilles prennent la forme d'un V avec un angle entre elles, et les première et seconde béquilles étant reliées mécaniquement l'une à l'autre, **caractérisé par le fait que** :
la première béquille (12, 13, 16, 17) comprend une première roue (4) destinée à venir en contact avec le bateau, placée à la seconde extrémité de la première béquille (12, 13, 16, 17) ;
la seconde béquille (14, 15, 18, 19) comprend une seconde roue (4) destinée à venir en contact avec le bateau, placée à la seconde extrémité de la seconde béquille (14, 15, 18, 19) ; et
la première béquille (12, 13, 16, 17) est plus longue que la première béquille (14, 15, 18, 19).

2. Appareil selon la revendication 1, dans lequel
l'angle entre les première et seconde béquilles est variable.

3. Appareil selon la revendication 2, dans lequel
l'angle peut être élargi pour laisser passer la plus large partie du bateau.

4. Appareil selon la revendication 3, dans lequel
un ressort (5) s'étend entre les première et seconde béquille.

5. Appareil selon la revendication 1, dans lequel
une tige de repère (8) est attachée à une extrémité externe de la seconde béquille pour visualiser la direction correcte dans l'emplacement.

6. Appareil selon la revendication 5, dans lequel
la tige de repère est équipée d'un appareil pour stocker la ligne d'amarre.

7. Appareil selon la revendication 5, dans lequel
la tige de repère (8) peut faire partie d'un système de verrouillage où la première béquille (16, 17) peut être verrouillée dans une position fermée.

8. Appareil selon la revendication 1, dans lequel
la première béquille (16, 17) peut être verrouillée dans une position fermée.

9. Système pour manoeuvrier et amarrer un bateau dans un emplacement ayant deux côtés, **caractérisé par le fait que** :
deux appareils tels que définis à la revendication 1 sont attachés de chaque côté de l'emplacement.
